# EUROPEAN PATENT SPECIFICATION

(11) **EP 2 510 773 B1**
(45) Date of publication and mention of the grant of the patent: **20.03.2019**
(21) Application number: 10835811.0
(22) Date of filing: 11.11.2010
(51) Int. Cl.: A01D 34/416, A01D 34/82, A01D 34/90, A01D 75/20

(54) **BUSH CUTTER AND PROTECTIVE COVER FOR THE SAME**
MOTORSENSE UND SCHUTZABDECKUNG DAFÜR
DÉBROUSSAILLEUSE ET SON CAPOT PROTECTEUR

(30) Priority: 10.12.2009 JP 2009280097
(43) Date of publication of application: 17.10.2012
(73) Proprietor: Makita Corporation, Anjo-shi, Aichi 446-8502 (JP)
(72) Inventor: ITO Ryosuke, Anjo-shi, Aichi 446-8502 (JP); KONDO Masaki, Anjo-shi, Aichi 446-8502 (JP)
(74) Representative: Kramer Barske Schmidtchen Patentanwälte PartG mbB
(86) International application number: PCT/JP2010/070092
(87) International publication number: WO 2011/070889

(56) References cited:
- JP-A- 7 170 586
- JP-A- 9 210 032
- JP-A- 2001 333 616
- JP-A- 2006 214 170
- JP-U- 52 146 514
- JP-U- S52 146 514
- US-A- 4 864 728
- US-A- 4 864 728
- US-A- 6 052 976
- US-B2- 6 779 324

## Description

### TECHNICAL FIELD

The present teachings relates to a bush cutter and a protective cover for the same.

### DESCRIPTION OF RELATED ART

US 6,052,976 A discloses a trimmer with a trimmer shield that can be manually assembled to a housing. US 6,779,324 B2 discloses an adjustable debris shield for a hand-held power trimmer.

A bush cutter which cuts grass and bushes is commonly known. The bush cutter is provided with a cutting blade which rotates and a protective cover which partially covers the cutting blade. In a bush cutter of this type, when the cutting blade is changed for one of a different size and/or type, the size of the protective cover does not match the cutting blade and the cutting blade may interfere with the protective cover, or the cutting blade may be exposed more than necessary from the protective cover.

In relation to the problem described above, Japanese Patent Application Laid-open No. 2001-333616 and U.S. Patent Specification No. 4864728 disclose a bush cutter which is configured in such a manner that a portion of a protective cover is detachably attached. In this bush cutter, the protective cover is provided with a main body and an expansion part, and the size of the protective cover can be adjusted by attaching and detaching the expansion part. In other words, it is possible to make the protective cover larger by attaching the expansion part and it is possible to make the protective cover smaller by detaching the expansion part. Alternatively, it is also possible to change the size of the protective cover by changing the expansion part that is attached.

### SUMMARY OF INVENTION

### Technical Problem

The conventional protective cover has a structure in which the expansion part can be attached and detached readily, without requiring a tool. If the structure of this kind is adopted, then when the protective cover makes contact with an external object, for instance, the expansion part may become detached unintentionally and the user's work may be obstructed. Furthermore, in some countries and/or regions, a structure that allows the expansion part to be detached without requiring a tool may be prohibited by legal standards.

In response to these circumstances, a structure which fixes the expansion part by screws or bolts can be conceived. By adopting this structure, it is possible to fix the expansion part securely, in such a manner that unintentional detachment of the expansion part is prevented. However, the screws or bolts may come loose with shocks and vibrations, and hence a new problem occurs in that the screws or bolts may fall off. Furthermore, in the structure using the screws or bolts, attaching the expansion part requires a tool and also takes time, causing increased inconvenience to the user.

In view of the problems of the prior art described above, the object is to provide a protective cover for a bush cutter in which the attachment and detachment of the cover is improved.

### Solution to Technical Problem

The above object can be solved by providing a bush cutter according to claim 1. A bush cutter comprises a cutting blade and a protective cover configured to partly cover the cutting blade. The protective cover comprises a main body and an expansion part configured to be detachably attached to the main body, and the expansion part is configured not to require any tool for its attachment to the main body but require at least one tool for its detachment from the main body. According to this bush cutter, a user is able to attach the expansion part readily, without requiring a tool. Once attached, the expansion part is fixed securely to the main body and cannot be detached unless a tool is used. Consequently, the expansion part is prevented from becoming detached unintentionally from the main body.

One of the main body and the expansion part of the protective cover is provided with a click portion, the other of the main body and the expansion part of the protective cover is provided with an engaging hole, and the engaging hole is configured to accept engagement of the click portion at an inner side and expose the engaged click portion to an outer side. The engaging hole has an aperture geometry that allows entry of the tool for pushing the click portion from the outside in order to disengage the click portion from the engaging hole. With this bush cutter, when the expansion part is attached to the main body, the click portion engages with the engaging hole while deforming passively. A tool is not required for this. When detaching the expansion part from the main body, the click portion engaged with the engaging hole will need to be pushed with a tool in order to be disengaged. In other words, the expansion part cannot be detached without using a tool. According to this structure, a separate coupling member such as a pin is not required, and it is possible to avoid problems, such as a coupling member of this kind falling off.

Preferably, if the expansion part is configured to be attached to the main body by sliding in one circumferential direction with respect to the main body and to be detached from the main body by sliding in the other circumferential direction with respect to the main body, the click portion may be located at an end portion in the one circumferential direction of the main body or an end portion in the other circumferential direction of the expansion part. According to this structure, the section where the click portion contacts the main body or the expansion part when the expansion part slides with respect to the main body can be shortened. In other words, the section in which resistance is received due to a contact of the click portion can be shortened.

One of the main body and the expansion part of the protective cover is provided with a contact portion configured to contact with the click portion from inside when the click portion is pushed out from the engaging hole with the tool. According to this structure, even if the user pushes the click portion strongly with a tool, the click portion does not deform excessively and breakage of the click portion can be prevented.

Preferably, the bush cutter relating to the present teachings may comprise an operation pole including a tip end on which the cutting blade is disposed, and a protective bar extending from the operation pole and configured to be located in front of a user when the user holds the bush cutter. In this case, the click portion engaging with the engaging hole and the protective bar provided on the operation pole may preferably be located at a same side with respect to a plane containing a rotation axis of the cutting blade and a central axis of the operation pole. Normally, the user carries out detachment of the expansion part by laying the bush cutter on the ground. In this case, when the click portion engaged with the engaging hole is upwards, then the click portion can be pushed readily with a tool. However, if a protective bar provided on the operation pole is located on an opposite side from the click portion which is engaged with the engaging hole, then this means that the bush cutter is supported by the protective bar, and the posture of the bush cutter is unstable. Therefore, the click portion which may preferably be engaged with the engaging hole and the protective bar provided on the operation pole are located on a same side, whereby the user can readily perform a task of detaching the expansion part with the bush cutter in a lying state.

### BRIEF DESCRIPTION OF DRAWINGS

FIG. 1 is a schematic drawing showing a bush cutter according to an embodiment.
FIG. 2 is an external view showing a cutting blade unit from above.
FIG. 3 is an external view showing the cutting blade unit from the side.
FIG. 4 is an external view showing the cutting blade unit from above (when an expansion part has been slided).
FIG. 5 is an external view showing the cutting blade unit from the side (when the expansion part has been slided).
FIG. 6 is a cross-sectional diagram along line VI - VI in FIG. 2.
FIG. 7 shows an enlarged view of the portion VII in FIG. 3.
FIG. 8 shows an enlarged view of the portion VIII in FIG. 5.
FIG. 9 is a cross-sectional diagram along line IX - IX in FIG. 7.
FIG. 10 is a cross-sectional diagram along line X - X in FIG. 7.

### EMBODIMENT OF INVENTION

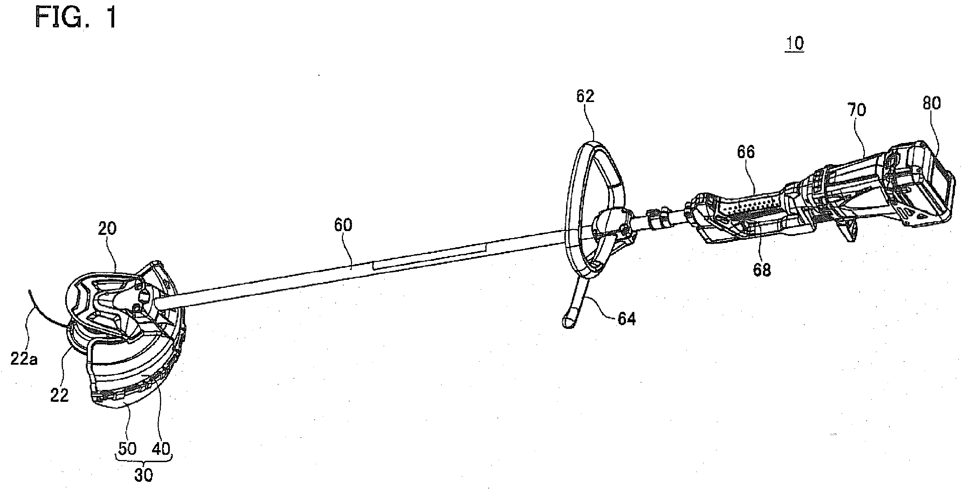

A bush cutter 10 according to an embodiment is described here with reference to the drawings. The bush cutter 10 is one type of motorized gardening tool which is used generally for cutting grass. As shown in FIG. 1, the bush cutter 10 comprises: an operation pole 60, a cutting blade unit 20 provided on an anterior end of the main pole 60, and a motor unit 70 provided on a posterior end of the operation pole 60. A battery pack 80 is installed detachably in the motor unit 70.

The operation pole 60 is a hollow pipe member. A rotating shaft (not illustrated) which extends from the motor unit 70 to the cutting blade unit 20 is provided inside the operation pole 60. The rotating shaft is driven so as to rotate by the motor unit 70 and transmits torque from the motor unit 70 to the cutting blade unit 20.

The cutting blade unit 20 comprises a cutting blade 22 and a protective cover 30. The cutting blade 22 is installed detachably on the cutting blade unit 20. The cutting blade 22 shown in FIG. 1 is a so-called cord cutter, and has a nylon cord 22a which cuts grass and bushes. It is also possible to install a circular disk-type cutting blade, instead of the cutting blade 22 of the type shown in FIG. 1, in the cutting blade unit 20. The cutting blade 22 installed in the cutting blade unit 20 is supported rotatably and is also connected to the rotating shaft described above.

The protective cover 30 partially covers the cutting blade 22. The protective cover 30 has a main body 40 which is fixed to the operation pole 60 and an expansion part 50 which is attached to the main body 40. The protective cover 30 can be made larger by attaching the expansion part 50 and can be made smaller by detaching the expansion part 50. Furthermore, the size of the protective cover 30 can be changed by changing the expansion part 50 for one of a different shape or size. The structure of the protective cover 30 will be described later in detail.

The motor unit 70 is a unit for driving the cutting blade 22, and incorporates a motor, a reducing gear and a control circuit. The motor unit 70 is connected to the cutting blade 22 of the cutting blade unit 20, via the rotating shaft which was described above. The motor unit 70 receives a supply of electric power from the battery pack 80 and drives rotation of the cutting blade 22 of the cutting blade unit 20 by causing the rotating shaft to rotate.

A loop handle 62, a protective bar 64 and a grip 66 are provided on the operation pole 60. The loop handle 62 is fixed to an intermediate portion of the operation pole 60. The loop handle 62 extends in a loop shape to the upper side of the operation pole 60. The loop handle 62 is formed by bending a pipe member into a loop shape, and is attached to the operation pole 60 in a direction intersecting with a lengthwise direction of the operation pole 60. The grip 66 is fixed between the loop handle 62 and the motor unit 70. The grip 66 is provided along the operation pole 60. A trigger switch 68 which is operated by the user is provided on the grip 66.

A user normally holds the bush cutter 10 by gripping the loop handle 62 with a left hand, and gripping the grip 66 with a right hand. In this case, the cutting blade unit 20 is located in front of the user, the motor unit 70 is located to the rear of the user, and the operation pole 60 is located on the right-hand side of the user. The user is able to cut bushes growing on the ground, by moving the rotating cutting blade 22 leftwards and rightwards over the ground. The cutting blade 22 is operated and halted by the trigger switch 68 on the grip 66.

The protective bar 64 extends in one direction from the operation pole 60. The protective bar 64 is located in the vicinity of the loop handle 62 and is located in front of the user when the user holds the bush cutter 10. The protective bar 64 prevents the cutting blade unit 20 from coming near the user, when the bush cutter 10 receives a large reaction force, for example. The protective bar 64 is not absolutely necessary.

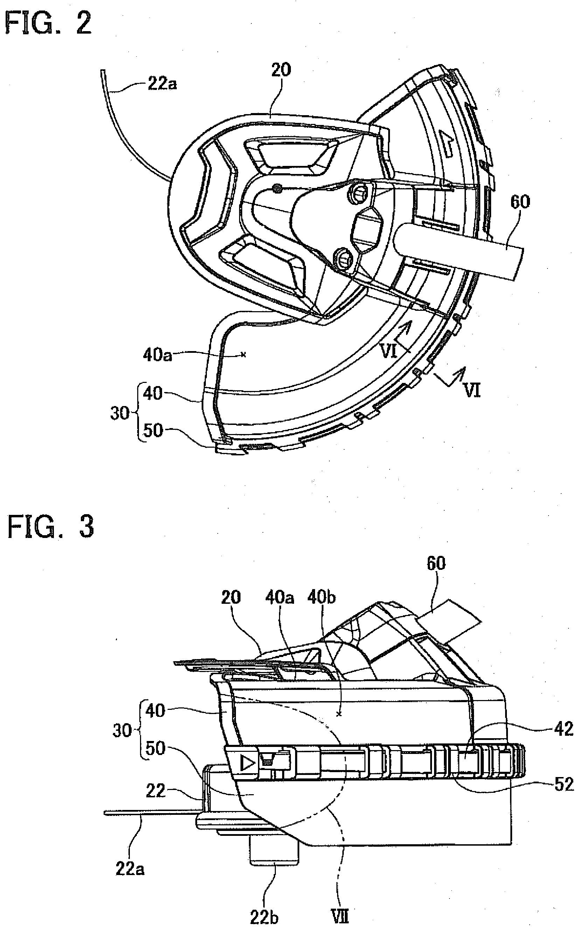

Next, the structure of the protective cover 30 will be described in detail. As shown in FIG. 2 and FIG. 3, the main body 40 of the protective cover 30 has an upper surface portion 40a which is fixed to the operation pole 60 and a circumference wall portion 40b which extends downwards from a perimeter of the upper surface portion 40a. The expansion part 50 of the protective cover 30 is attached to a lower end of the circumference wall portion 40b of the main body 40.

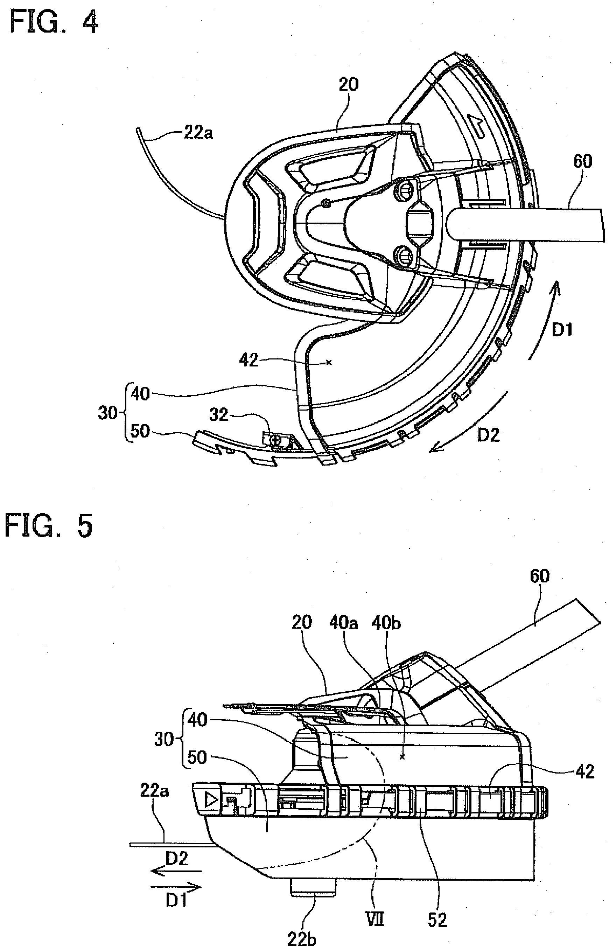

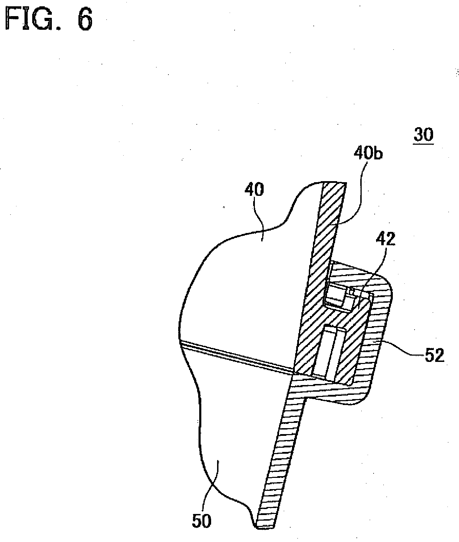

As shown in FIG. 2, FIG. 3 and FIG. 6, a rail portion 42 which extends in a circumferential direction is formed on the main body 40. This rail portion 42 extends along the lower end of the circumference wall portion 40b. On the other hand, a plurality of rail receiving portions 52 which engages slidably with the rail portion 42 is formed in the expansion part 50. This plurality of rail receiving portions 52 is located in a circumferential direction along an upper end of the expansion part 50. Consequently, the expansion part 50 is supported slidably with respect to the main body 40, as shown in FIG. 4 and FIG. 5. The expansion part 50 is attached to the main body 40 by sliding in one circumferential direction with respect to the main body 40 (the direction D1 shown in FIG. 4), and is detached from the main body 40 by sliding in the other circumferential direction with respect to the main body 40 (the direction D2 shown in FIG. 4).

As shown in FIG. 4, a cutter part 32 is provided on the expansion part 50. The cutter part 32 cuts a tip end of the nylon cord 22a. The cutting blade 22 according to the present embodiment has a built-in spool about which the nylon cord 22a is wound, and a button 22b which pays out the nylon cord 22a is provided in a lower surface thereof. The cutting blade 22 is composed in such a manner that the nylon cord 22a is paid out through a prescribed length when the button 22b is pushed while the cutting blade 22 is driven to rotate. Consequently, the user is able to pay out new nylon cord 22a by pushing the button 22b of the cutting blade 22 against the ground, when the nylon cord 22a has severed during work. In this case, the front tip of the nylon cord 22a is cut off by the cutter part 32 and the nylon cord 22a is adjusted to an appropriate length.

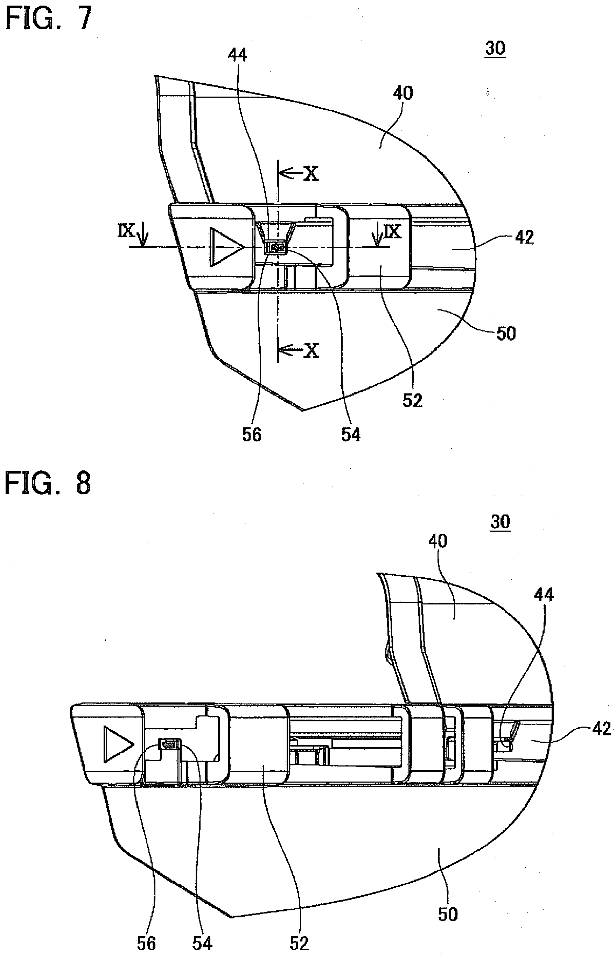

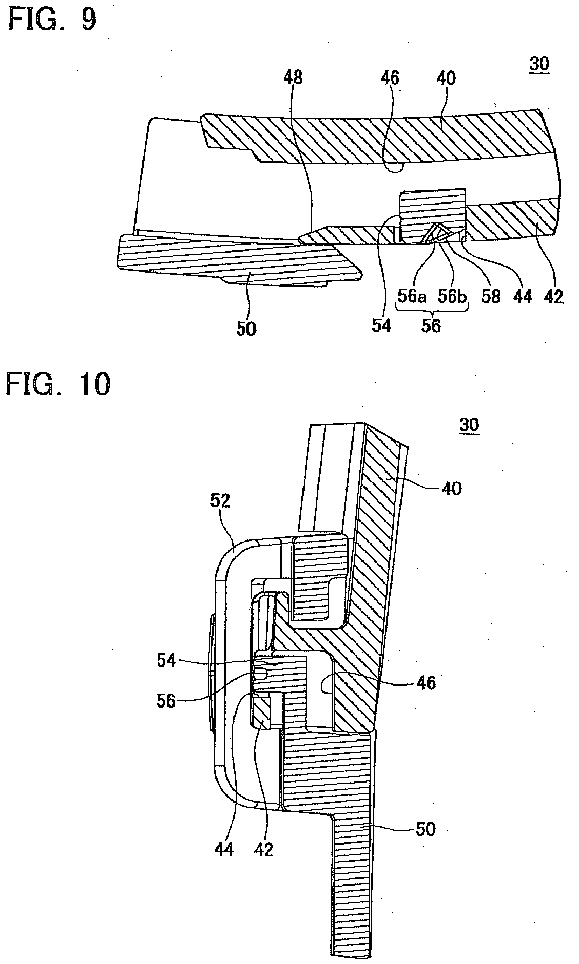

FIG. 7 shows an enlarged view of the portion VII in FIG. 3 and FIG. 8 shows an enlarged view of the portion VIII in FIG. 5. FIG. 9 shows a cross-sectional diagram along line IX - IX in FIG. 7 and FIG. 10 shows a cross-sectional diagram along line X - X in FIG. 7. As shown in FIG. 7, FIG. 8, FIG. 9 and FIG. 10, a click portion 54 is formed on the expansion part 50 of the protective cover 30, and an engaging hole 44 that accepts engagement of the click portion 54 is formed in the main body 40 of the protective cover 30. In the protective cover 30, the click portion 54 of the expansion part 50 engages with the engaging hole 44 of the main body 40 when the expansion part 50 is attached to the main body 40, thereby fixing the expansion part 50 in non-slidable fashion with respect to the main body 40 (see FIG. 7, FIG. 9 and FIG. 10). When the click portion 54 is disengaged from the engaging hole 44, the expansion part 50 becomes slidable with respect to the main body 40, and the expansion part 50 can be detached from the main body 40 (see FIG. 8).

The engaging hole 44 is formed in the rail portion 42 of the main body 40. On the other hand, the click portion 54 of the expansion part 50 is located on an inner side of the rail portion 42, and engages with the engaging hole 44 from the inner side. As shown in FIG. 9, an inclined surface 58 is formed on the click portion 54. Furthermore, an inclined surface 48 is also formed on the main body 40. When the expansion part 50 is attached to the main body 40, the expansion part 50 slides in one circumference direction with respect to the main body 40 (towards the right side in FIG. 9). In this case, due to a mutual contact between the inclined surfaces 48 and 58, the click portion 54 undergoes elastic deformation passively, and moves towards the inner surface of the rail portion 42. When the expansion part 50 slides further, the click portion 54 slides along the inner surface of the rail portion 42 and engages with the engaging hole 44. The mutually opposing front surfaces of the click portion 54 and the engaging hole 44 are perpendicular with respect to the sliding direction of the expansion part 50. Consequently, sliding movement of the expansion part 50 is prevented and the expansion part 50 is fixed with respect to the main body 40. Therefore, with the protective cover 30 according to the present invention it is possible readily to attach the expansion part 50 to the main body 40, without requiring a tool.

As described above, when attaching the expansion part 50 to the main body 40, the click portion 54 slides over the inner surface of the rail portion 42 in an elastically deformed state. In this case, the user receives a resistance force caused by friction. In regards to this point, in the present embodiment, the direction of attachment of the expansion part 50 is one circumferential direction (the D1 direction shown in FIG. 4), whereas the click portion 54 is provided at an end portion in the other circumferential direction (D2 direction shown in FIG. 4) of the expansion part 50. By adopting a structure of this kind, it is possible to shorten the distance through which the click portion 54 slides over the inner surface of the rail portion 42 in an elastically deformed state, when attaching the expansion part 50 to the main body 40. As a result of this, the distance through which the aforementioned resistance force is received when the user attaches the expansion part 50 is shortened, and the damage (deformation or friction) received by the click portion 54 is also suppressed.

The engaging hole 44 is a through hole and the click portion 54 is exposed to an outer side when engaged therein. Accordingly, it is possible to disengage the click portion 54 from the engaging hole 44 by using a tool, such as a screwdriver, to push in the click portion 54 from the outside. Here, the engaging hole 44 has a relatively small aperture geometry which allows entry of a tool, such as a screwdriver, and prevents entry of a user's fingertip. In other words, a structure is adopted in which the click portion 54 which is engaged with the engaging hole 44 cannot be pushed in and cannot be disengaged from the engaging hole 44, by a user's nail or fingertip. Consequently, with the protective cover 30 according to the present embodiment, unless a tool is used, it is not possible to disengage the click portion 54 and the expansion part 50 cannot be detached from the main body 40.

A recess portion 56 which receives a front tip of a tool is formed in the click portion 54. As FIG. 9 clearly shows, the recess portion 56 has a V-shaped cross-section in the depth direction and comprises a pair of inclined edges 56a, 56b. Here, the pair of inclined edges 56a, 56b are not mutually symmetrical and the inclined surface 56a which is located in the direction of detachment of the expansion part 50 is formed to a larger size. By means of this structure, when pushing in the click portion 54 with a tool, the user can readily abut the front tip of the tool against the larger inclined edge 56a and can readily apply force in the other circumferential direction (the D2 direction shown in FIG. 4), which is the direction in which the expansion part 50 is detached.

As shown in FIG. 9 and FIG. 10, a wall portion 46 located to the inside of the engaging hole 44 is formed in the main body 40. The wall portion 46 opposes the click portion 54 which is engaged with the engaging hole 44, via a gap, from the inside. When the click portion 54 is pushed by a tool and disengaged from the engaging hole 44, the click portion 54 contacts the wall portion 46. Furthermore, deformation of the click portion 54 is prevented by this contact with the wall portion 46. Consequently, even if the click portion 54 is pushed too strongly with the tool, excessive deformation of the click portion 54 is prevented. The wall portion 46 limits deformation of the click portion 54 and thereby prevents bending and breaking of the click portion 54.

In the present embodiment, the click portion 54 which is engaged with the engaging hole 44, and the protective bar 64, are located on a same side of the user when holding the bush cutter 10. More specifically, the click portion 54 which is engaged with the engaging hole 44, and the protective bar 64, are located on a same side with respect to a plane containing a rotation axis of the cutting blade 22 and a central axis of the operation pole 60. Normally, the user carries out detachment of the expansion part 50 with the bush cutter 10 lying on the ground. In this case, if the bush cutter 10 is laid down with the click portion 54 that is engaged with the engaging hole 44 facing upwards, then the click portion 54 can be pushed readily with a tool. If the protective bar 64 is provided on the operation pole 60, then depending on the orientation in which the bush cutter 10 is laid down, the bush cutter 10 is supported on the protective bar 64 and the posture of the bush cutter 10 is unstable. Therefore, in the present embodiment, the click portion 54 which is engaged with the engaging hole 44 and the protective bar 64 which is provided on the operation pole 60 are located on the same side. Therefore, even if the bush cutter 10 is laid down with the click portion 54 facing upwards, the protective bar 64 does not provide an obstacle and the posture of the bush cutter 10 is also stabilized. Consequently, the user can readily carry out a task of detaching the expansion part 50.

For example, conversely to the structure of the present embodiment, it is also possible to form the click portion 54 on the main body 40 and to form the engaging hole 44 in the expansion part 50. Furthermore, it is also possible to form click portions 54 respectively in the main body 40 and the expansion part 50, and to form engaging holes 44 corresponding to the respective click portions 54, respectively in the expansion part 50 and the main body 40. In addition, the fixing of the main body 40 and the expansion part 50 may also employ another fixing structure, rather than a click portion 54 and an engaging hole 44. For instance, the main body 40 and the expansion part 50 may be fixed together by a coupling member, such as a pin or clip. In this case, desirably, the coupling member is formed so that it can be attached without requiring a tool, but requires a tool for its detachment.

The technical elements disclosed in the specification or the drawings may be utilized separately or in all types of combinations, and are limited to the combinations set forth in the claims.

## Claims

1. A bush cutter (10) comprising
a cutting blade (22), and
a protective cover (30) configured to partly cover the cutting blade (22), wherein
the protective cover (30) comprises a main body (40) and an expansion part (50) configured to be detachably attached to the main body (40),
the expansion part (50) is configured not to require any tool for its attachment to the main body (40) but require at least one tool for its detachment from the main body (40),
one of the main body (40) and the expansion part (50) of the protective cover (30) is provided with a click portion (54),
the other of the main body (40) and the expansion part (50) of the protective cover (30) is provided with an engaging hole (44), and
the engaging hole (44) has an aperture geometry that is configured to allow entry of the tool for pushing the click portion (54) from the outside in order to disengage the click portion (54) from the engaging hole (44),
wherein the engaging hole (44) is configured to accept engagement of the click portion (54) at an inner side and expose the engaged click portion (54) to an outer side, and
one of the main body (40) and the expansion part (50) of the protective cover (30) is provided with a contact portion (46) configured to contact with the click portion (54) from inside when the click portion (54) is pushed out from the engaging hole (44) with the tool, **characterized in that** the contact portion is located to the inside of the engaging hole (44) and opposes the click portion (54) which is engaged with the engaging hole (44), via a gap, from the inside.

2. The bush cutter (10) as in claim 1, wherein
the expansion part (50) is configured to be attached to the main body (40) by sliding in one circumferential direction with respect to the main body (40) and to be detached from the main body (40) by sliding in the other circumferential direction with respect to the main body (40), and
the click portion (54) is located at an end portion in the one circumferential direction of the main body (40) or an end portion in the other circumferential direction of the expansion part (50).

3. The bush cutter (10) as in claim 1 or 2, further comprising
an operation pole (60) including a tip end on which the cutting blade (22) is disposed, and
a protective bar (64) extending from the operation pole (60) and configured to be located in front of a user when the user holds the bush cutter (10),
wherein the click portion (54) engaging with the engaging hole (44) and the protective bar (64) are located at a same side with respect to a plane containing a rotation axis of the cutting blade (22) and a central axis of the operation pole (60).

## Patentansprüche

1. Buschschneider (10), mit
einem Schneidemesser (22), und
einer Schutzabdeckung (30), die zum teilweisen Abdecken des Schneidemessers konfiguriert ist, bei dem
die Schutzabdeckung (30) einen Hauptkörper (40) und einen Erweiterungsteil (50) aufweist, der zum entfernbaren Anbringen an dem Hauptkörper (40) konfiguriert ist,
der Erweiterungsteil (50) dazu konfiguriert ist, dass er kein Werkzeug für seine Anbringung an dem Hauptkörper (40) benötigt, aber zumindest ein Werkzeug für seine Entfernung von dem Hauptkörper (40) benötigt,
einer von dem Hauptkörper (40) und dem Erweiterungsteil (50) der Schutzabdeckung mit einem Klickbereich (54) vorgesehen ist,
der andere von dem Hauptkörper (40) und dem Erweiterungsteil (50) der Schutzabdeckung (30) mit einem Eingriffsloch (44) vorgesehen ist, und
das Eingriffsloch (44) eine Öffnungsgeometrie aufweist, die derart konfiguriert ist, dass sie den Eintritt des Werkzeuges zum Drücken des Klickbereiches (54) von der Außenseite zum Entriegeln des Klickbereiches (54) von dem Eingriffsloch (44) ermöglicht,
bei dem
das Eingriffsloch (44) zum Annehmen des Eingriffs des Klickbereiches (54) an einer Innenseite und zum Freilegen des eingegriffenen Klickbereiches (54) zu einer Außenseite konfiguriert ist, und
einer von dem Hauptkörper (40) und dem Erweiterungsteil (50) der Schutzabdeckung (30) mit einem Kontaktbereich (46) vorgesehen ist, der dazu konfiguriert ist, mit dem Klickbereich (54) von der Innenseite in Kontakt zu kommen, wenn der Klickbereich (54) aus dem Eingriffsloch (44) mit dem Werkzeug herausgedrückt wird,
**dadurch gekennzeichnet, dass**
der Kontaktbereich sich an der Innenseite des Eingriffloches (44) befindet und dem Klickbereich (54), welcher mit dem Eingriffsloch (44) in Eingriff steht, über einem Spalt von der Innenseite gegenüberliegt.

2. Buschschneider (10) nach Anspruch 1, bei dem
der Erweiterungsteil (50) dazu konfiguriert ist, durch Gleiten in einer Umfangsrichtung in Bezug auf den Hauptkörper (40) an dem Hauptkörper (40) angebracht zu werden und durch Gleiten in die andere Umfangsrichtung in Bezug auf den Hauptkörper (40) von dem Hauptkörper (40) entfernt zu werden, und
der Klickbereich (54) sich an einem Endbereich in der einen Umfangsrichtung des Hauptkörpers (40) oder einem Endbereich in der anderen Umfangsrichtung des Erweiterungsteils (50) befindet.

3. Buschschneider (10) nach Anspruch 1 oder 2, der ferner
einen Betätigungsstab (60), der ein Spitzenende aufweist, an welchem das Schneidemesser (22) angeordnet ist, und
einen Schutzstab (64) aufweist, der sich von dem Betätigungsstab (60) erstreckt und dazu konfiguriert ist, dass er sich an einer Vorderseite eines Benutzers befindet, wenn der Benutzer den Buschschneider (10) hält,
bei dem sich der Klickbereich (54), der mit dem Eingriffsloch (44) in Eingriff steht, und der Schutzstab (64) auf der gleichen Seite in Bezug auf eine Ebene befinden, die eine Drehachse des Schneidemessers (22) und eine Mittelachse des Betätigungsstabs (60) enthält.

## Revendications

1. Débroussailleuse (10) comprenant
une lame coupante (22), et
un capot de protection (30) configuré pour recouvrir partiellement la lame coupante (22), où
le capot de protection (30) comprend un corps principal (40) et une partie d'extension (50) configurée pour être fixé de manière amovible au corps principal (40),
la partie d'extension (50) est configurée pour ne nécessiter aucun outil pour sa fixation sur le corps principal (40) mais nécessite au moins un outil pour son détachement du corps principal (40),
un élément parmi le corps principal (40) et la partie d'extension (50) du capot de protection (30) est pourvu d'une partie à déclic (54),
l'autre élément parmi le corps principal (40) et la partie d'extension (50) du capot de protection (30) est pourvue d'un trou d'engagement (44), et
le trou d'engagement (44) a une géométrie d'ouverture configurée pour permettre l'entrée de l'outil pour pousser la partie à déclic (54) depuis l'extérieur pour désengager la partie à déclic (54) du trou d'engagement (44),
où le trou d'engagement (44) est configuré pour accepter un engagement de la partie à déclic (54) sur un côté intérieur et exposer la partie à déclic engagée (54) à un côté extérieur, et
un élément parmi le corps principal (40) et la partie d'extension (50) du capot de protection (30) est pourvu d'une partie de contact (46) configurée pour entrer en contact avec la partie à déclic (54) de l'intérieur lorsque la partie à déclic (54) est poussée hors du trou d'engagement (44) avec l'outil, **caractérisée en ce que** la partie de contact est située à l'intérieur du trou d'engagement (44) et s'oppose à la partie à déclic (54) qui engagée avec le trou d'engagement (44), via un espace, depuis l'intérieur.

2. Débroussailleuse (10) selon la revendication 1, dans laquelle
la partie d'extension (50) est configurée pour être attachée au corps principal (40) par coulissement dans une direction circonférentielle par rapport au corps principal (40) et pour être détachée du corps principal (40) par coulissement dans l'autre direction circonférentielle par rapport au corps principal (40), et
la partie à déclic (54) est située à une partie d'extrémité dans la direction circonférentielle du corps principal (40) ou une partie d'extrémité dans l'autre direction circonférentielle de la partie d'extension (50).

3. Débroussailleuse (10) selon la revendication 1 ou 2, comprenant en outre
un pôle d'opération (60) comprenant une extrémité sur laquelle la lame coupante (22) est disposée, et
une barre de protection (64) s'étendant depuis le pôle d'opération (60) et configurée pour être placée devant un utilisateur lorsque celui-ci tient la débroussailleuse (10),
où la partie à déclic (54) s'engageant avec le trou d'engagement (44) et la barre de protection (64) sont situées du même côté par rapport à un plan contenant un axe de rotation de la lame coupante (22) et un axe central du pôle d'opération (60).
